# EUROPÄISCHE PATENTSCHRIFT

(11) **EP 3 456 891 B1**
(45) Veröffentlichungstag und Bekanntmachung des Hinweises auf die Patenterteilung: **26.02.2020**
(21) Anmeldenummer: 17191032.6
(22) Anmeldetag: 14.09.2017
(51) Int. Cl.: E03D 5/016, E03D 7/00, E03D 5/00, E03B 1/04

(54) **FÄKALIENTANK FÜR EINE SANITÄREINRICHTUNG**
WASTE TANK FOR A SANITARY DEVICE
CUVE POUR MATIÈRES FÉCALES POUR UN DISPOSITIF SANITAIRE

(43) Veröffentlichungstag der Anmeldung: 20.03.2019
(73) Patentinhaber: ADCO Umweltdienste Holding GmbH, 40880 Ratingen (DE)
(72) Erfinder: STEIGERWALD, Norbert, 63825 Schöllkrippen (DE); BONEWITZ, Andre, 36289 Friedewald (DE)
(74) Vertreter: Rohmann, Michael

(56) Entgegenhaltungen:
- DE-A1- 2 441 368
- GB-A- 2 365 912
- US-A- 3 934 275
- US-A- 4 050 102
- US-A1- 2011 030 802

## Beschreibung

Die Erfindung betrifft einen Fäkalientank für eine Sanitäreinrichtung, wobei der Fäkalientank zur Aufnahme der Fäkalien und/oder des Abwassers aus zumindest einer Sanitärvorrichtung der Sanitäreinrichtung dient. Gegenstand der Erfindung ist außerdem ein transportabler Sanitärcontainer mit zumindest einem Fäkalientank sowie ein Verfahren zur Rezyklierung von Spülwasser in einer Sanitäreinrichtung.

Fäkalientanks der eingangs genannten Art sind aus der Praxis in unterschiedlichen Ausführungsformen prinzipiell bekannt und kommen beispielsweise in Sanitäreinrichtungen, insbesondere in transportablen Sanitäreinrichtungen zum Einsatz. Transportable Sanitäreinrichtungen werden für einen gewissen Zeitraum bei Veranstaltungen, etwa auf Messen, auf Baustellen oder dergleichen aufgestellt und später wieder abtransportiert. Die Sanitäreinrichtungen bzw. die transportablen Sanitäreinrichtungen können am Einsatzort zumeist nicht ohne weiteres an ein Abwassersystem bzw. an die Kanalisation angeschlossen werden und aus diesem Grund sind sie oftmals mit einem Fäkalientank ausgestattet. Bei den aus der Praxis bekannten Fäkalientanks hat es sich allerdings als nachteilig herausgestellt, dass diese Tanks durch die Aufnahme von Fäkalien und Spülwasser bzw. Spülflüssigkeit aus den Sanitärvorrichtungen relativ schnell einen hohen Füllstand erreichen und daher am Aufstellungsort vergleichsweise häufig durch Fachpersonal zwischenentleert werden müssen.

Grundsätzlich ist es auch bereits bekannt und in ökologischer Hinsicht vorteilhaft, die in dem Fäkalientank aufgefangene Flüssigkeit als Spülwasser bzw. Spülflüssigkeit wiederzuverwenden. Dazu werden entsprechende Filter- und Absaugvorrichtungen eingesetzt. Hierbei ergibt sich in der Praxis häufig das Problem, dass die in oder an den Fäkalientanks angeordneten Absaugvorrichtungen durch die festen Bestandteile im Fäkalientank verstopfen und/oder dass feste Bestandteile und Schwebeteilchen mit abgesaugt werden. Zu diesen festen Bestandteilen können neben den Fäkalien selbst auch Toilettenpapier, Papierhandtücher oder dergleichen zählen, die in den Fäkalientank gelangen. In der Folge wird die Absaugleistung beeinträchtigt oder das Absaugsystem beschädigt und dementsprechend resultiert ein hoher Wartungsaufwand. Bislang wurde keine zufriedenstellende Lösung gefunden, die es erlaubt, einen Fäkalientank bzw. eine Sanitäreinrichtung mit einem solchen Fäkalientank für einen den Anforderungen genügenden Zeitraum ohne Zwischenentleerung bzw. Wartung durch Fachpersonal verwenden zu können. Ein weiterer Nachteil von den aus der Praxis bekannten Sanitäreinrichtungen bzw. transportablen Sanitäreinrichtungen, die mit einem Fäkalientank ausgestattet sind, ist die oftmals begrenzt flexible Einsetzbarkeit, da die Sanitäreinrichtungen zumeist eine externe Stromzufuhr benötigen, insbesondere wenn zur Wiederverwendung der Flüssigkeit aus den Fäkalientanks Pumpen eingesetzt werden. Insoweit besteht Verbesserungsbedarf.

Aus DE 24 41 368 A1 ist ein Fäkalientank mit einem Zulauf und einem Auslass bekannt. Hier wird mit einem zweiphasigen System gearbeitet. Als Spülflüssigkeit wird ein nicht-wässriges Fluid verwendet, das eine geringere Dichte als Wasser aufweist und somit die obere Phase bildet. Unterhalb dieser Phase befinden sich das Abwasser und die Fäkalien in einer zweiten Phase. Innerhalb des Fäkalientanks ist ein Absaugschwimmer mit einem Sieb angeordnet. Mit einer Pumpe, die dem Absaugschwimmer zugeordnet ist, wird ein Teil des öligen Fluids der oberen Phase abgesaugt und als Spülflüssigkeit für die Toilette verwendet. Anschließend gelangen die Fäkalien zusammen mit dem Spülfluid über eine Rampe in den Fäkalientank und dort erfolgt die Trennung in zwei Phasen aufgrund der unterschiedlichen Dichte der Flüssigkeiten. Der bekannte Fäkalientank ist aufwendig aufgebaut und auch die mit diesem Fäkalientank verbundenen Maßnahmen sind aufwendig und störanfällig.

Auch aus US 3,934,275 A ist ein Sanitärsystem bekannt, dessen Spülfluidversorgung und Abwasserspeicherung zweiphasig funktioniert. Auch diese Vorrichtung ist aufwendig aufgebaut und die erforderlichen Maßnahmen sind aufwendig und störanfällig. Ähnliches gilt auch für ein aus US 4,050,102 A bekanntes Toilettensystem mit Fäkalientank.

Der Erfindung liegt das technische Problem zugrunde, einen Fäkalientank der eingangs genannten Art anzugeben, bei dem die beschriebenen Nachteile effektiv und funktionssicher vermieden werden können und der insbesondere eine ausreichend lange Zeit am Verwendungsort ohne Zwischenentleerung und/oder Wartung durch Fachpersonal eingesetzt werden kann. Außerdem liegt der Erfindung das technische Problem zugrunde, einen transportablen Sanitärcontainer mit einem Fäkalientank anzugeben, der allen Anforderungen genügt und flexibel einsetzbar ist. Schließlich liegt der Erfindung das technische Problem zugrunde, ein Verfahren zur Rezyklierung von Spülwasser in einer Sanitäreinrichtung anzugeben, bei dem die beschriebenen Nachteile vermieden werden können.

Zur Lösung dieses technischen Problems lehrt die Erfindung einen Fäkalientank für eine Sanitäreinrichtung, wobei der Fäkalientank zur Aufnahme der Fäkalien und/oder des Abwassers aus zumindest einer Sanitärvorrichtung der Sanitäreinrichtung dient und zumindest einen Zulauf und zumindest einen Auslass aufweist, wobei in dem Fäkalientank zumindest ein Absaugschwimmer mit zumindest einer Absaugkammer und mit zumindest einem Absaugsieb angeordnet ist, wobei an die Absaugkammer zumindest eine Absaugleitung zur Verbindung mit zumindest einer Absaugpumpe angeschlossen ist und wobei mittels des Absaugschwimmers bzw. mittels der Absaugleitung Flüssigkeit aus dem Fäkalientank absaugbar ist, welche Flüssigkeit als Spülflüssigkeit für zumindest eine Sanitärvorrichtung der Sanitäreinrichtung verwendet wird, wobei der Absaugschwimmer zumindest eine Schwimmkammer aufweist und wobei die Schwimmkammer mit Luft bzw. im Wesentlichen mit Luft gefüllt ist.

Es liegt im Rahmen der Erfindung, dass es sich bei der Sanitäreinrichtung um eine transportable Sanitäreinrichtung, beispielsweise um einen transportablen Sanitärcontainer oder einen transportablen Sanitäranhänger handelt. Prinzipiell kann die Sanitäreinrichtung aber auch eine gewissermaßen fest installierte Sanitäreinrichtung, beispielsweise eine Toilettenkabine auf Raststätten oder auf einem Campingplatz sein, welche Sanitäreinrichtung nicht mit einem Abwassersystem bzw. der Kanalisation verbunden ist und daher einen Fäkalientank benötigt. Sanitärvorrichtung meint im Rahmen der Erfindung insbesondere ein WC-Becken, ein Urinal, eine Urinalrinne oder dergleichen, wobei die Sanitärvorrichtung bevorzugt eine spülbare Sanitärvorrichtung ist.

Der erfindungsgemäße Fäkalientank dient insbesondere zur Aufnahme der Fäkalien und/oder des Abwassers aus zumindest einer solchen Sanitärvorrichtung. Dazu ist der zumindest eine Zulauf des Fäkalientanks vorzugsweise mit zumindest einer Sanitärvorrichtung verbunden. Erfindungsgemäß ist die Flüssigkeit in dem Fäkalientank mittels des zumindest einen Absaugschwimmers absaugbar und kann als Spülflüssigkeit für zumindest eine Sanitärvorrichtung der Sanitäreinrichtung verwendet werden. Zweckmäßigerweise wird also die abgesaugte Flüssigkeit gleichsam wiederverwendet und so kann eine unerwünscht häufige Entleerung des Fäkalientanks vermieden werden. Besonders bevorzugt wird der Fäkalientank lediglich einmal am Ende der Einsatzzeit entleert und diese Entleerung kann zweckmäßigerweise beim Auslieferer bzw. in einer Servicestelle erfolgen.

Um den Fäkalientank in den Betriebszustand zu versetzen, wird vorteilhafterweise eine gewisse Menge Brauchwasser in dem Fäkalientank vorgelegt. Mit dem Begriff Brauchwasser bzw. Brauchwasservorlage ist hier und nachfolgend auch Trinkwasser bzw. eine Trinkwasservorlage gemeint. Auf die vorstehend beschriebene Weise wird gewährleistet, dass auch für die ersten Benutzungen der zumindest einen Sanitärvorrichtung bereits Spülwasser zur Verfügung steht und zudem wird vermieden, dass aufgrund einer zu geringen Flüssigkeitsmenge im Fäkalientank über den Absaugschwimmer bzw. die Absaugleitung Luft in das Absaugsystem bzw. die Absaugpumpe gelangt. Betriebszustand des Fäkalientanks meint im Rahmen der Erfindung folglich insbesondere denjenigen Zustand, in dem der Tank in einer Sanitäreinrichtung verwendet werden kann bzw. einsatzbereit ist, also bevorzugt einen Zustand, in dem sich eine gewisse Flüssigkeitsmenge in dem Fäkalientank befindet. Es liegt in diesem Zusammenhang im Rahmen der Erfindung, dass das Brauchwasser bzw. die Brauchwasservorlage bereits beim Auslieferer bzw. in einer Servicestelle in den Fäkalientank eingebracht wird und sich der Fäkalientank in der Folge am Einsatzort direkt im Betriebszustand befindet und somit bevorzugt keine weitere Wasserzufuhr benötigt. Prinzipiell ist es aber auch möglich, die Brauchwasservorlage am Einsatzort in den Fäkalientank einzubringen. Eine besonders bevorzugte Ausführungsform der Erfindung ist dadurch gekennzeichnet, dass zwischen 5 % und 40%, bevorzugt 10 % bis 35%, besonders bevorzugt 15 % bis 30 % des Gesamtinnenvolumens des Fäkalientanks mit der Brauchwasservorlage gefüllt werden, um den Fäkalientank in den Betriebszustand zu versetzen. Gesamtinnenvolumen des Fäkalientanks meint dabei insbesondere das Fassungsvermögen des Fäkalientanks. Das Gesamtinnenvolumen bzw. das Fassungsvermögen des Fäkalientanks beträgt vorzugsweise zwischen 50 L und 1000 L, bevorzugt zwischen 300 L und 800 L, besonders bevorzugt zwischen 500 L und 700 L. Grundsätzlich kann das Gesamtinnenvolumen bzw. das Fassungsvermögen des Fäkalientanks auch noch größer oder noch kleiner sein. Insbesondere wird das Gesamtinnenvolumen bzw. Fassungsvermögen des Fäkalientanks in Abhängigkeit von der Anzahl der Sanitärvorrichtungen und/oder der Einsatzdauer des Fäkalientanks gewählt.

Nach sehr bevorzugter Ausführungsform der Erfindung ist die Sanitäreinrichtung ein transportabler Sanitärcontainer. Bei einem solchen transportablen Sanitärcontainer kann es sich beispielsweise um einen Standardcontainer nach ISO-Norm handeln, der zum Einsatzort transportiert und dort aufgestellt wird oder um einen Anhänger aus einem Fahrgestell und einem darauf fest installierten Container, der an ein Kraftfahrzeug angehängt, zum Einsatzort transportiert und dort als vollständiger Anhänger abgestellt werden kann.

Vorteilhafterweise weist der Sanitärcontainer zumindest eine Sanitärkabine auf und bevorzugt ist in dieser zumindest einen Sanitärkabine zumindest eine Sanitärvorrichtung angeordnet. Es empfiehlt sich, dass für jede Sanitärkabine des Sanitärcontainers und/oder für jede Sanitärvorrichtung eine separate Absaugleitung an die Absaugkammer des Absaugschwimmers angeschlossen ist. Dieser Ausführungsform liegt die Erkenntnis zugrunde, dass bei Benutzung der Sanitärkabine bzw. einer in der Sanitärkabine angeordneten Sanitärvorrichtung Flüssigkeit aus dem Fäkalientank speziell für diese Sanitärkabine bzw. diese Sanitärvorrichtung abgesaugt werden kann und dass zudem insbesondere mehrere Sanitärkabinen gleichzeitig benutzt bzw. mehrere Sanitärvorrichtungen gleichzeitig gespült bzw. mit Spülwasser versorgt werden können.

Gemäß sehr empfohlener Ausgestaltung der Erfindung ist das Absaugsieb an der dem Boden des Fäkalientanks zugewandten Seite des Absaugschwimmers angeordnet und bildet bevorzugt zumindest einen Teil der dem Boden des Fäkalientanks zugewandten Wandung des Absaugschwimmers, besonders bevorzugt bildet das Absaugsieb die dem Boden des Fäkalientanks zugewandte Wandung des Absaugschwimmers. Boden des Fäkalientanks meint im Rahmen der Erfindung insbesondere den Boden bzw. die Unterseite des Fäkalientanks im Betriebszustand des Fäkalientanks. Zweckmäßigerweise ist an die Absaugkammer des Absaugschwimmers zumindest eine Spülleitung angeschlossen. Vorzugsweise ist also zusätzlich zu der zumindest einen Absaugleitung zumindest eine separate Spülleitung an die Absaugkammer des Absaugschwimmers angeschlossen. Empfohlenermaßen dient diese Spülleitung zur Spülung der Absaugkammer und/oder des Absaugsiebes. Es empfiehlt sich, dass dazu eine Flüssigkeit - beispielsweise Wasser und/oder eine Reinigungsflüssigkeit - durch die Spülleitung in die Absaugkammer befördert wird und von dort aus, insbesondere durch das Absaugsieb, in den Fäkalientank gelangt. Während die zumindest eine Absaugleitung zur Absaugung von Flüssigkeit aus dem Fäkalientank - insbesondere mittels zumindest einer Absaugpumpe - dient, wird die zumindest eine Spülleitung bevorzugt zur Einbringung von Flüssigkeit in den Fäkalientank verwendet. Dieser Ausführungsform liegt die Erkenntnis zugrunde, dass durch die Einbringung von Flüssigkeit über die zumindest eine Spülleitung in die Absaugkammer des Absaugschwimmers und die anschließende Strömung der Flüssigkeit durch das Absaugsieb in den Fäkalientank feste Bestandteile, die sich an der Unterseite des Absaugsiebes und/oder innerhalb des Absaugsiebes festgesetzt haben, entfernt werden können. Bevorzugt erfolgt die Spülung der Absaugkammer und/oder des Absaugsiebes im Zuge der Einbringung des Brauchwassers bzw. der Brauchwasservorlage in den Fäkalientank und diese Einbringung der Brauchwasservorlage geschieht besonders bevorzugt über die Spülleitung. Dann können feste Bestandteile, die sich an der Unterseite des Absaugsiebes und/oder innerhalb des Absaugsiebes während eines vorherigen Einsatzes des Fäkalientankes festgesetzt haben, entfernt bzw. ausgespült werden. Grundsätzlich kann eine Spülung der Absaugkammer bzw. des Absaugsiebes aber auch zu einem anderen Zeitpunkt über die Spülleitung erfolgen, etwa im Falle einer unerwünschten Verstopfung des Absaugsiebes.

Nach einer bewährten Ausführungsform der Erfindung weist das Absaugsieb Maschen mit einer Maschenweite von 0,1 mm bis 5,0 mm, bevorzugt von 0,2 mm bis 2,0 mm, besonders bevorzugt von 0,3 mm bis 1,0 mm auf. Masche des Absaugsiebes meint im Rahmen der Erfindung insbesondere eine Öffnung des Absaugsiebes. Empfohlenermaßen ist das Absaugsieb ein Drahtgitter oder ein Lochblech oder dergleichen. Die Maschen bzw. Öffnungen des Absaugsiebes können auf unterschiedliche Art und Weise ausgebildet sein und besitzen beispielsweise eine kreisförmige oder ovale oder rechteckige oder quadratische Form. Maschenweite meint im Rahmen der Erfindung insbesondere die größte Erstreckung einer Masche des Absaugsiebes bzw. den größten Durchmesser einer Masche des Absaugsiebes. Zweckmäßigerweise meint die Maschenweite die durchschnittliche größte Erstreckung der Maschen des Absaugsiebes bzw. den durchschnittlichen größten Durchmesser der Maschen des Absaugsiebes. Empfohlenermaßen wird die Maschenweite des Absaugsiebes derart gewählt, dass beim Absaugen von Flüssigkeit aus dem Fäkalientank die festen Bestandteile und/oder die Schwebeteilchen aufgrund der Filterwirkung des Absaugsiebes im Fäkalientank verbleiben.

Erfindungsgemäß weist der Absaugschwimmer zumindest eine Schwimmkammer auf und die zumindest eine Schwimmkammer ist mit Luft bzw. im Wesentlichen mit Luft gefüllt. Nach einer bewährten Ausführungsform der Erfindung ist die Schwimmkammer mit der Maßgabe ausgebildet, dass der Absaugschwimmer im Betriebszustand des Fäkalientanks mit einem Anteil von 5 % bis 95 % seiner Gesamthöhe H aus der Flüssigkeitsoberfläche des Fäkalientanks herausragt. Gesamthöhe H des Absaugschwimmers meint im Rahmen der Erfindung insbesondere die größte Erstreckung des Absaugschwimmers senkrecht zum Boden des Fäkalientanks bzw. senkrecht zur Flüssigkeitsoberfläche im Betriebszustand des Fäkalientanks. Bevorzugt ragt der Absaugschwimmer im Betriebszustand des Fäkalientanks mit einem Anteil von 20 % bis 85 %, besonders bevorzugt mit einem Anteil von 35 % bis 80 % und ganz besonders bevorzugt mit einem Anteil von 50 % bis 75 % seiner Gesamthöhe H aus der Flüssigkeitsoberfläche des Fäkalientanks heraus. Zweckmäßigerweise ist die zumindest eine Schwimmkammer in Bezug auf den Boden bzw. die Flüssigkeitsoberfläche des Fäkalientanks oberhalb der Absaugkammer angeordnet. Dann ragt insbesondere zumindest ein Teil der Schwimmkammer aus der Flüssigkeitsoberfläche des Fäkalientanks heraus und zumindest ein Teil der Absaugkammer befindet sich unterhalb der Flüssigkeitsoberfläche des Fäkalientanks und ragt gleichsam in die Flüssigkeit hinein. Da durch das Absaugsieb bevorzugt Flüssigkeit in die Absaugkammer eindringen kann, ist die Absaugkammer dann vorzugsweise etwa bis zu dem Anteil der Gesamthöhe H des Absaugschwimmers mit Wasser bzw. Flüssigkeit gefüllt, der unterhalb der Flüssigkeitsoberfläche des Fäkalientanks angeordnet ist. In diesem Zusammenhang liegt es im Rahmen der Erfindung, dass ein Anteil von 5 % bis 95 % des Gesamtinnenvolumens des Absaugschwimmers aus der Flüssigkeitsoberfläche des Fäkalientanks herausragt. Bevorzugt ragt ein Anteil von 20 % bis 85 %, besonders bevorzugt ein Anteil von 35 % bis 80 %, ganz besonders bevorzugt ein Anteil von 50 % bis 75 % des Gesamtinnenvolumens des Absaugschwimmers aus der Flüssigkeitsoberfläche des Fäkalientanks heraus. Gesamtinnenvolumen des Absaugschwimmers meint in diesem Zusammenhang insbesondere die Summe aus dem Innenvolumen der zumindest einen Absaugkammer und aus dem Innenvolumen der zumindest einen Schwimmkammer. Es empfiehlt sich, dass zumindest ein Teil des Innenvolumens der Schwimmkammer aus der Flüssigkeitsoberfläche des Fäkalientanks herausragt und dass zumindest ein Teil des Innenvolumens der Absaugkammer unterhalb der Flüssigkeitsoberfläche des Fäkalientanks angeordnet ist und gleichsam in die Flüssigkeit hineinragt.

Zweckmäßigerweise ist die Schwimmkammer eine von der Absaugkammer räumlich getrennte Kammer und die Schwimmkammer verleiht dem Absaugschwimmer gewissermaßen Auftrieb. Es ist also bei dieser Ausgestaltung zweckmäßigerweise nicht möglich, dass Flüssigkeit aus der Absaugkammer in die Schwimmkammer eindringt. Da die Flüssigkeit im Fäkalientank durch das Absaugsieb bevorzugt in die Absaugkammer eindringen kann, ist insbesondere derjenige Teil des Gesamtinnenvolumens des Absaugschwimmers bzw. der Absaugkammer, der unterhalb der Flüssigkeitsoberfläche angeordnet ist, mit Flüssigkeit gefüllt. Diese Flüssigkeit, die sich innerhalb des Absaugschwimmers bzw. innerhalb der Absaugkammer befindet, kann dann vorzugsweise über die zumindest eine Absaugleitung abgesaugt werden.

Es liegt im Rahmen der Erfindung, dass der mit der Schwimmkammer versehene Absaugschwimmer im Betriebszustand des Fäkalientanks mit Abstand bzw. berührungsfrei zu dem Boden des Fäkalientanks angeordnet ist. Dies wird gemäß bevorzugter Ausführungsform durch die Auftriebswirkung der Schwimmkammer erreicht. Dieser Ausführungsform liegt die Erkenntnis zugrunde, dass sich feste Bestandteile wie Fäkalien selbst und/oder Toilettenpapier, Papierhandtücher oder dergleichen im Fäkalientank in Bodennähe ansammeln und dass sich mit einem Absaugschwimmer, der im Betriebszustand des Fäkalientankes mit Abstand zu dem Boden des Fäkalientanks angeordnet ist, vergleichsweise saubere Flüssigkeit aus dem Fäkalientank absaugen lässt und gleichzeitig eine Verstopfung bzw. Verschmutzung des Absaugsiebes durch feste Bestandteile, die sich in dem Fäkalientank befinden, vermieden werden kann. Prinzipiell ist es auch möglich, dass an der dem Boden des Fäkalientanks zugewandten Seite des zumindest einen Absaugschwimmers zumindest ein Abstandselement angeordnet ist, das insbesondere einen Kontakt der Unterseite des Absaugschwimmers bzw. des Absaugsiebes mit dem Boden des Fäkalientanks verhindert, beispielsweise für den Fall, dass sich keine Flüssigkeit im Fäkalientank befindet.

Eine besonders bevorzugte Ausführungsform der Erfindung zeichnet sich dadurch aus, dass das Verhältnis des Innenvolumens der Absaugkammer zum Innenvolumen der Schwimmkammer zwischen 0,5 und 2,0, vorzugsweise zwischen 0,7 und 1,8, bevorzugt zwischen 1,0 und 1,6 beträgt. Durch das Verhältnis der Innenvolumina der zumindest einen Absaugkammer und der zumindest einen Schwimmkammer kann insbesondere gesteuert werden, mit welchem Anteil der Gesamthöhe H bzw. mit welchem Volumenanteil des Gesamtinnenvolumens des Absaugschwimmers der Absaugschwimmer aus der Flüssigkeitsoberfläche des Fäkalientanks herausragt und in diesem Zusammenhang kann bevorzugt auch die Füllhöhe bzw. das Füllvolumen der Absaugkammer mit Flüssigkeit aus dem Fäkalientank über das Verhältnis des Innenvolumens der Absaugkammer zum Innenvolumen der Schwimmkammer eingestellt werden.

Es empfiehlt sich, dass das Verhältnis des Gesamtinnenvolumens des Absaugschwimmers zum Gesamtinnenvolumen des Fäkalientanks zwischen 0,001 und 0,2, vorzugsweise zwischen 0,005 und 0,1, bevorzugt zwischen 0,01 und 0,05 beträgt.

Eine besonders empfohlene Ausführungsform der Erfindung ist dadurch gekennzeichnet, dass das Absaugsieb eine Grundfläche bzw. Absaugfläche von 500 cm² bis 4.000 cm², vorzugsweise von 1.000 cm² bis 3.500 cm², besonders bevorzugt von 1.500 cm² bis 3.000 cm² aufweist. Grundfläche bzw. Absaugfläche des Absaugsiebes meint im Rahmen der Erfindung insbesondere diejenige Fläche des Absaugsiebes, durch die Flüssigkeit in die Absaugkammer eindringen kann bzw. gesaugt werden kann. In Abhängigkeit von der Ausgestaltung des Absaugschwimmers kann das Absaugsieb beispielsweise kreisförmig bzw. rund oder rechteckig, insbesondere quadratisch oder dergleichen ausgestaltet sein. Grundfläche bzw. Absaugfläche des Absaugsiebes meint dann den Flächeninhalt desjenigen Teils des Absaugsiebes, durch den Flüssigkeit in die Absaugkammer gesaugt werden kann. Es wurde bereits eingangs darauf hingewiesen, dass zweckmäßigerweise das Absaugsieb zumindest einen Teil der Wandung der Absaugkammer bzw. des Absaugschwimmers bildet, die dem Boden des Fäkalientanks zugewandt ist, besonders bevorzugt bildet das Absaugsieb diese Wandung bzw. bildet das Absaugsieb im Wesentlichen diese Wandung. Es empfiehlt sich, dass der Fäkalientank bzw. der Boden des Fäkalientanks eine Grundfläche von 10.000 cm² bis 40.000 cm², vorzugsweise von 15.000 cm² bis 35.000 cm², besonders bevorzugt von 20.000 cm² bis 30.000 cm² aufweist. Boden des Fäkalientanks meint im Rahmen der Erfindung insbesondere den Boden bzw. die Unterseite des Fäkalientanks im Betriebszustand des Fäkalientanks. Der Fäkalientank kann insbesondere eine rechteckige oder quadratische oder kreisförmige bzw. runde Bodenfläche bzw. Grundfläche aufweisen.

Nach besonders bevorzugter Ausführungsform der Erfindung beträgt das Verhältnis der Grundfläche bzw. Absaugfläche des Absaugsiebes zur Grundfläche des Fäkalientanks zwischen 0,025 und 0,4, vorzugsweise zwischen 0,05 und 0,3, bevorzugt zwischen 0,05 und 0,2.

Grundsätzlich ist die Dimensionierung und die Ausgestaltung des zumindest einen Absaugschwimmers und/oder des Fäkalientanks abhängig von der Anzahl der Sanitärvorrichtungen und/oder der Einsatzdauer des Fäkalientanks. Es liegt auch im Rahmen der Erfindung, dass - bevorzugt abhängig von der Anzahl der Sanitärvorrichtungen und/oder der Größe des Fäkalientanks - mehrere Absaugschwimmer in dem Fäkalientank angeordnet sind.

Zur Lösung des technischen Problems lehrt die Erfindung außerdem einen transportablen Sanitärcontainer mit zumindest einer Sanitärkabine, zumindest einer in der Sanitärkabine angeordneten Sanitärvorrichtung und zumindest einem Fäkalientank, insbesondere einem vorstehend beschriebenen Fäkalientank, zur Aufnahme der Fäkalien und/oder des Abwassers aus der zumindest einen Sanitärvorrichtung, wobei der Fäkalientank zumindest einen Zulauf und zumindest einen Auslass aufweist, wobei in dem Fäkalientank zumindest ein Absaugschwimmer mit zumindest einer Absaugkammer und zumindest einem Absaugsieb angeordnet ist, wobei an die Absaugkammer zumindest eine Absaugleitung zur Verbindung mit zumindest einer Absaugpumpe angeschlossen ist und wobei mittels des Absaugschwimmers bzw. mittels der Absaugleitung Flüssigkeit aus dem Fäkalientank absaugbar ist, welche Flüssigkeit als Spülflüssigkeit für zumindest eine Sanitärvorrichtung des Sanitärcontainers verwendet wird, wobei der Absaugschwimmer zumindest eine Schwimmkammer aufweist und wobei die Schwimmkammer mit Luft bzw. im Wesentlichen mit Luft gefüllt ist.

Transportabler Sanitärcontainer meint im Rahmen der Erfindung insbesondere einen Sanitärcontainer mit einem Fahrgestell, wobei das Fahrgestell an ein Kraftfahrzeug anschließbar ist und dann zum Einsatzort transportiert werden kann. Der Sanitärcontainer kann dann mit dem Fahrgestell abgestellt werden, beispielsweise durch ausfahrbare Stützen oder dergleichen und später wieder an ein Kraftfahrzeug angehängt und abtransportiert werden. Grundsätzlich kann es sich bei dem transportablen Sanitärcontainer aber auch um einen Standardcontainer nach ISO-Norm handeln, der ohne Fahrgestell am Einsatzort abgestellt und später wieder abtransportiert wird.

Es liegt im Rahmen der Erfindung, dass zumindest ein Spülwasserbehälter vorgesehen ist, in dem die aus dem Fäkalientank abgesaugte Flüssigkeit bzw. die Spülflüssigkeit zwischengelagert wird. Besonders bevorzugt ist dabei jeder Sanitärkabine und/oder jeder Sanitärvorrichtung des Sanitärcontainers zumindest ein Spülwasserbehälter zugeordnet. Der zumindest eine Spülwasserbehälter dient also gleichsam als Reservoir für die aus dem Fäkalientank abgesaugte Flüssigkeit bzw. die Spülflüssigkeit und gewährleistet, dass stets eine ausreichende Menge der Flüssigkeit für die Spülung der zumindest einen Sanitärvorrichtung zur Verfügung steht. Dies gilt insbesondere auch für die Ausführungsform, in der jeder Sanitärkabine und/oder jeder Sanitärvorrichtung zumindest ein Spülwasserbehälter zugeordnet ist.

Zweckmäßigerweise weist der transportable Sanitärcontainer einen Serviceraum auf, in dem die zum Betrieb des Sanitärcontainers erforderlichen Einrichtungen untergebracht sind. Vorzugsweise sind diese Einrichtungen für den Benutzer nicht sichtbar. Der Serviceraum kann zum Beispiel zwischen einer Kabinenwand und einer Außenwand des Sanitärcontainers angeordnet sein und kann etwa durch eine Klappe oder dergleichen von der Außenseite des Sanitärcontainers zugänglich sein. In dem Serviceraum können beispielsweise der zumindest eine Spülwasserbehälter, die zumindest eine Absaugpumpe sowie Rohrleitungen, Schalter und Überwachungseinrichtungen und dergleichen untergebracht sein.

Es liegt im Übrigen im Rahmen der Erfindung, dass der Sanitärcontainer zumindest zwei Sanitärkabinen aufweist. Besonders bevorzugt weist der erfindungsgemäße Sanitärcontainer zwei Sanitärkabinen auf. Prinzipiell liegt es aber auch im Rahmen der Erfindung, dass der Sanitärcontainer mehr als zwei, beispielsweise drei, vier oder fünf Sanitärkabinen aufweist.

Nach einer weiteren empfohlenen Ausführungsform des erfindungsgemäßen transportablen Sanitärcontainers ist in der zumindest einen Sanitärkabine, vorzugsweise in jeder Sanitärkabine, eine Handwaschvorrichtung angeordnet. Handwaschvorrichtung meint im Rahmen der Erfindung insbesondere einen Wasserhahn mit einem darunter angeordneten Waschbecken oder einem Ablauf. Die Handwaschvorrichtung dient vorzugsweise zum Reinigen der Hände des Benutzers beispielsweise nach der Benutzung einer Sanitärvorrichtung des Sanitärcontainers. Zweckmäßigerweise wird die zumindest eine Handwaschvorrichtung mit Frischwasser aus einem Frischwassertank versorgt. Die Handwaschvorrichtung wird also empfohlenermaßen nicht mit der aus dem Fäkalientank abgesaugten Flüssigkeit versorgt, sondern bevorzugt mit Frischwasser aus zumindest einem Frischwassertank. Zweckmäßigerweise ist zur Förderung des Frischwassers zumindest eine Frischwasserpumpe vorgesehen. Der Frischwassertank und/oder die Frischwasserpumpe sind vorzugsweise in dem Serviceraum des transportablen Sanitärcontainers angeordnet.

Eine ganz besonders bevorzugte Ausgestaltung des erfindungsgemäßen transportablen Sanitärcontainers kennzeichnet sich dadurch, dass containeraußenseitig, vorzugsweise an der containeraußenseitigen Oberseite des Sanitärcontainers, zumindest ein Solarpanel angeordnet ist. Oberseite des Sanitärcontainers meint insbesondere das Containerdach und bevorzugt ist das zumindest eine Solarpanel containeraußenseitig auf dem Containerdach angeordnet. Prinzipiell kann das zumindest eine Solarpanel aber auch containeraußenseitig auf einer der Seitenwände des Sanitärcontainers angeordnet sein. Gemäß einer sehr bevorzugten Ausführungsform wird der erfindungsgemäße transportable Sanitärcontainer im Betriebszustand über das zumindest eine Solarpanel mit Strom versorgt. Betriebszustand des transportablen Sanitärcontainers meint insbesondere den Zustand des transportablen Sanitärcontainers, in dem dieser am Einsatzort aufgestellt ist und verwendet werden kann. Empfohlenermaßen ist das zumindest eine Solarpanel mit zumindest einer in oder an dem Sanitärcontainer angeordneten Batterie bzw. zumindest einem Akkumulator verbunden, so dass durch Sonneneinstrahlung diese Batterie geladen werden kann und den transportablen Sanitärcontainer in der Folge mit Strom versorgen kann. Es ist möglich, dass die Batterie im Serviceraum des transportablen Sanitärcontainers angeordnet ist. Die Stromversorgung dient dabei insbesondere zum Betrieb zumindest einer Pumpe, also der zumindest einen Pumpe zur Absaugung von Flüssigkeit aus dem Fäkalienbehälter und/oder zum Betrieb der zumindest einen Frischwasserpumpe. Grundsätzlich können auch andere Einrichtungen des transportablen Sanitärcontainers, die Strom benötigen, wie beispielsweise Beleuchtungseinrichtungen, elektrische Handtrockner oder dergleichen über die Batterie bzw. das zumindest eine Solarpanel mit Strom versorgt werden. In diesem Zusammenhang liegt es im Rahmen der Erfindung, dass keine zusätzliche Stromversorgung zum Betrieb des Sanitärcontainers erforderlich ist. Dieser Ausführungsform liegt die Erkenntnis zugrunde, dass der transportable Sanitärcontainer dann bevorzugt autark bzw. im Wesentlichen autark betrieben werden kann. Insbesondere die Stromversorgung über das Solarpanel in Kombination mit der Absaugung von Flüssigkeit aus dem Fäkalientank und der Verwendung dieser Flüssigkeit als Spülflüssigkeit für zumindest eine Sanitärvorrichtung des Sanitärcontainers ermöglicht einen Betrieb des Sanitärcontainers, bei dem weder ein externer Stromanschluss, noch ein externer Wasseranschluss, und auch kein Anschluss an ein Abwasser- bzw. Kanalisationssystem erforderlich ist. In dieser Hinsicht ist der transportable Sanitärcontainer also für einen gewissen Zeitraum weitgehend autark betreibbar.

Zur Lösung des technischen Problems lehrt die Erfindung außerdem ein Verfahren zur Rezyklierung von Spülwasser in einer Sanitäreinrichtung, insbesondere in einem transportablen Sanitärcontainer der vorstehend beschriebenen Art, wobei die Sanitäreinrichtung zumindest einen Fäkalientank, insbesondere einen Fäkalientank der obenstehend beschriebenen Art, aufweist, wobei in dem Fäkalientank Fäkalien und/oder Abwasser aus zumindest einer Sanitärvorrichtung der Sanitäreinrichtung aufgenommen werden, wobei in dem Fäkalientank zumindest ein Absaugschwimmer mit zumindest einer Absaugkammer und zumindest einem Absaugsieb angeordnet ist, wobei der Absaugschwimmer zumindest eine Schwimmkammer aufweist, wobei die Schwimmkammer mit Luft bzw. im Wesentlichen mit Luft gefüllt ist, wobei an die Absaugkammer zumindest eine Absaugleitung zur Verbindung mit zumindest einer Absaugpumpe angeschlossen ist und wobei mittels des Absaugschwimmers bzw. mittels der Absaugleitung Flüssigkeit aus dem Fäkalientank abgesaugt wird, wobei vorzugsweise die Flüssigkeit für den Einsatz als Spülflüssigkeit mit zumindest einem Desinfektionsmittel versetzt wird, wobei die so erzeugte Spülflüssigkeit zur Spülung zumindest einer Sanitärvorrichtung in der Sanitäreinrichtung verwendet wird und wobei das verunreinigte Spülwasser anschließend in den zumindest einen Fäkalientank zurückgeführt wird.

Nach besonders bevorzugter Ausführungsform des erfindungsgemäßen Verfahrens ist das Desinfektionsmittel Wasserstoffperoxid. Bevorzugt handelt es sich dabei um eine wässrige Wasserstoffperoxid-Lösung, für die zweckmäßigerweise zumindest ein Desinfektionsmittel-Tank in bzw. an dem Sanitärcontainer, besonders bevorzugt in dem Serviceraum des Sanitärcontainers, vorgesehen ist. Prinzipiell liegt es auch im Rahmen der Erfindung, dass die aus dem Fäkalientank abgesaugte Flüssigkeit mit anderen Desinfektionsmitteln, beispielsweise chlorhaltigen Desinfektionsmitteln oder dergleichen versetzt wird.

Eine sehr empfohlene Ausführungsform des erfindungsgemäßen Verfahrens ist dadurch gekennzeichnet, dass beim Absaugen der Flüssigkeit mittels des zumindest einen Absaugschwimmers aus dem Fäkalientank die in dem Fäkalientank vorhandenen festen Bestandteile und/oder die Schwebeteilchen aufgrund der Filterwirkung des Absaugsiebes in dem Fäkalientank verbleiben. Dementsprechend wird vorzugsweise lediglich Flüssigkeit bzw. im Wesentlichen Flüssigkeit mittels des zumindest einen Absaugschwimmers aus dem Fäkalientank abgesaugt.

Es liegt im Rahmen des erfindungsgemäßen Verfahrens, dass das zumindest eine Desinfektionsmittel der abgesaugten Flüssigkeit über eine Venturidüse zugegeben wird. Diese Zugabe des zumindest einen Desinfektionsmittels zur abgesaugten Flüssigkeit kann insbesondere auf dem Transportweg vom Fäkalientank zu der zumindest einen Sanitärvorrichtung und/oder zu dem zumindest einen Spülwasserbehälter erfolgen. Prinzipiell liegt es aber auch im Rahmen der Erfindung, dass das zumindest eine Desinfektionsmittel der abgesaugten Flüssigkeit aus dem Fäkalientank in dem Spülwasserbehälter zugegeben wird.

Eine Ausführungsform der Erfindung ist dadurch gekennzeichnet, dass der Füllstand des Fäkalientanks und/oder des Spülwasserbehälters und/oder des Frischwassertanks und/oder des Desinfektionsmittel-Tanks und/oder der Füllstand bzw. Ladezustand der Batterie gemessen bzw. detektiert wird und - insbesondere durch SMS - an eine Bedienungsperson - insbesondere an einen Servicetechniker - gesendet wird. Fernerhin können auch Alarm- und/oder Fehlermeldungen auf diese Weise gesendet werden.

Eine weitere Ausführungsform der Erfindung zeichnet sich dadurch aus, dass das Spülwasser mit zumindest einem Farbmittel versehen werden kann, wobei das Spülwasser durch Zugabe dieses Farbmittels vorzugsweise eine blaue Farbe erhält. Es liegt auch im Rahmen der Erfindung, dass dem Spülwasser Duftaromen zugegeben werden. Die Zugabe des zumindest einen Farbmittels und/oder der Duftaromen kann mittels einer Venturidüse und/oder einer Dosierpumpe oder aber durch Direkteingabe vorgenommen werden.

Der Erfindung liegt die Erkenntnis zugrunde, dass aufgrund der erfindungsgemäßen Ausbildung des Fäkalientanks eine vorteilhaft lange Einsatzdauer des Fäkalientanks bzw. des erfindungsgemäßen transportablen Sanitärcontainers ohne Zwischenentleerung des Fäkalientanks möglich ist. Dies gilt insbesondere im Vergleich zu aus der Praxis bekannten Maßnahmen. Durch die besondere erfindungsgemäße Ausgestaltung des Absaugschwimmers ist fernerhin der Wartungsaufwand des Fäkalientanks bzw. des transportablen Sanitärcontainers überraschend gering und somit ist die Funktionssicherheit des Fäkalientanks bzw. des transportablen Sanitärcontainers äußerst hoch. Es ist zudem anzumerken, dass der erfindungsgemäße transportable Sanitärcontainer am Einsatzort weitgehend autark betrieben werden kann und erst nach dem Abtransport in einer Servicestelle entleert und gereinigt werden muss. Fernerhin ist der Energiebedarf des erfindungsgemäßen transportablen Sanitärcontainers bzw. des erfindungsgemäßen Fäkalientanks im Vergleich zu aus der Praxis bekannten Maßnahmen äußerst niedrig. Aufgrund der speziellen Ausgestaltung des Absaugschwimmers benötigt insbesondere die zumindest eine Absaugpumpe zur Absaugung der Flüssigkeit aus dem Fäkalientank nur wenig Energie. Wenn die Stromversorgung nach bevorzugter Ausführungsform über zumindest ein Solarpanel erfolgt, ist ein weitgehend autarker Betrieb des erfindungsgemäßen transportablen Sanitärcontainers möglich. Dies ist besonders vorteilhaft und macht den transportablen Sanitärcontainer besonders flexibel einsetzbar. Das erfindungsgemäße Verfahren zeichnet sich dadurch aus, dass einfach, funktionssicher und wirtschaftlich Spülwasser in einer Sanitäreinrichtung rezykliert werden kann und das Verfahren ermöglicht daher mit geringem Aufwand einen wassersparenden Betrieb von Sanitäreinrichtungen. Dies ist insbesondere in ökologischer Hinsicht vorteilhaft, da die Sanitärvorrichtungen mit rezykliertem Wasser gespült werden und somit kein sauberes Frischwasser für die Spülung verwendet werden muss. Durch die erfindungsgemäße Rezyklierung des Spülwassers wird zudem eine vorteilhaft lange Einsatzdauer der transportablen Sanitärcontainer bzw. der Fäkalientanks ohne Zwischenentleerung und/oder Wartung ermöglicht und dies ist mit geringem wirtschaftlichen und konstruktiven Aufwand verbunden. Insbesondere eine starke Verschmutzung oder eine Verstopfung des Absaugschwimmers bzw. des Absaugsiebes kann mit den erfindungsgemäßen Maßnahmen nahezu gänzlich vermieden werden. Das Verfahren erfüllt zudem alle hygienischen Anforderungen. Zusammenfassend ist festzustellen, dass sich sowohl der erfindungsgemäße Fäkalientank als auch der erfindungsgemäße transportable Sanitärcontainer und das erfindungsgemäße Verfahren durch Einfachheit, einen geringen Aufwand und insbesondere durch einen geringen Kostenaufwand auszeichnen.

Nachfolgend wird die Erfindung anhand eines Ausführungsbeispiels näher erläutert. Es zeigen in schematischer Darstellung:
- Fig. 1: Eine perspektivische Unteransicht eines erfindungsgemäßen Fäkalientanks, teilweise aufgebrochen,
- Fig. 2: den Gegenstand gemäß Fig. 1 in einer perspektivischen Draufsicht,
- Fig. 3: einen erfindungsgemäßen Absaugschwimmer in einer Seitenansicht im Schnitt,
- Fig. 4: eine perspektivische Ansicht eines erfindungsgemäßen transportablen Sanitärcontainers und
- Fig. 5: den Gegenstand gemäß Fig. 4 in einer perspektivischen Ansicht von der anderen Seite, teilweise aufgebrochen.

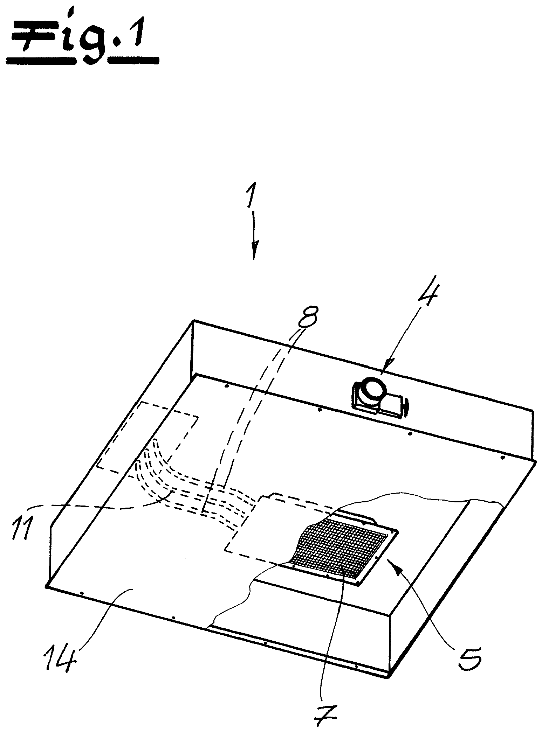

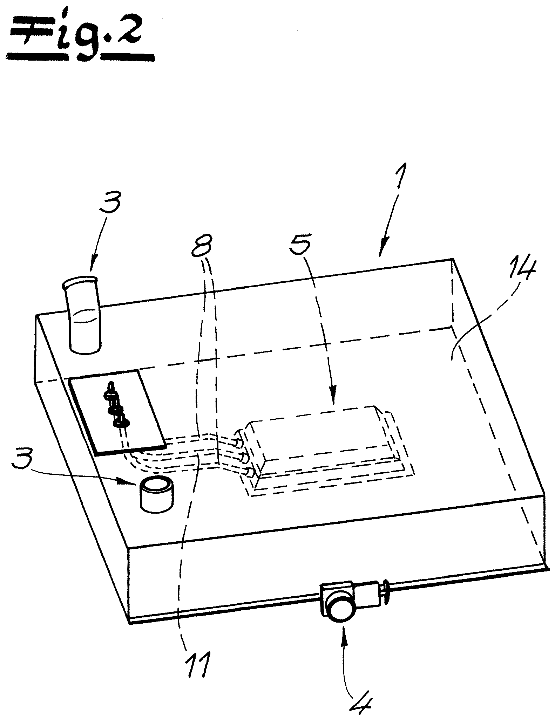

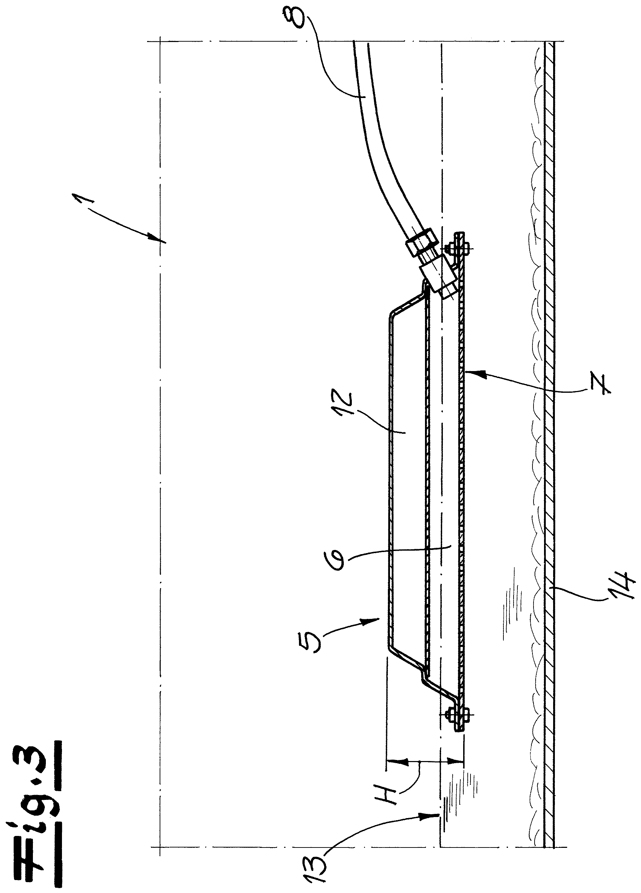

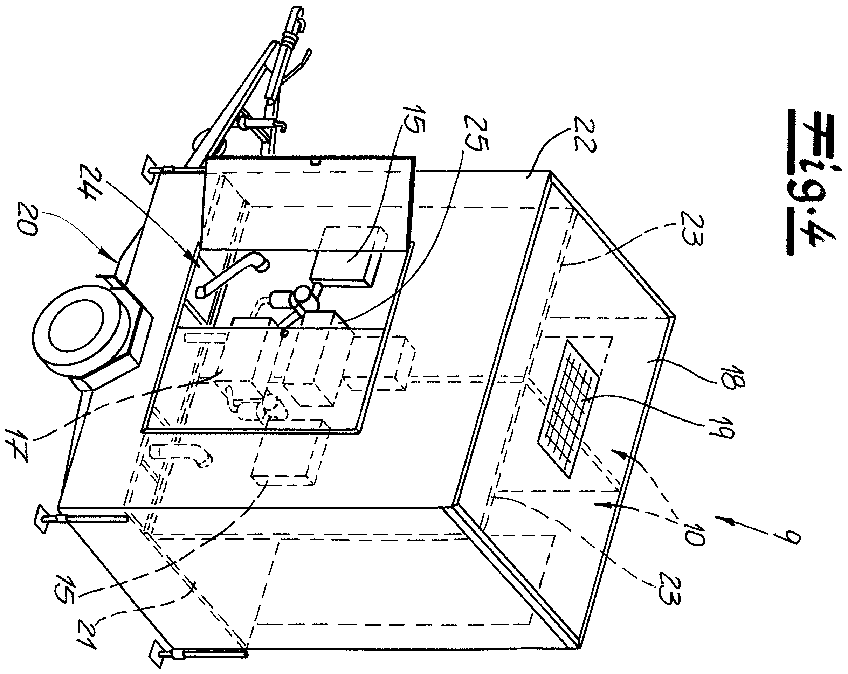

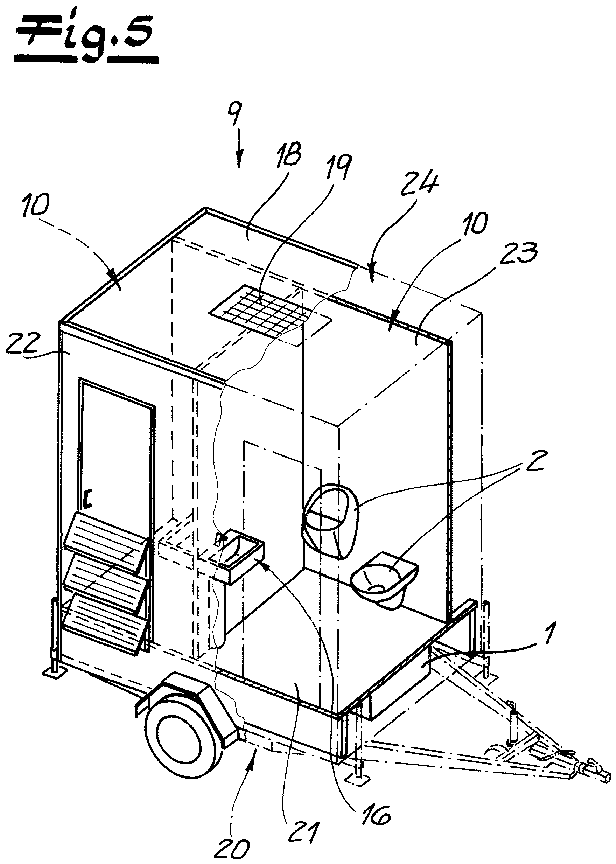

Die Fig. 1 und 2 zeigen einen erfindungsgemäßen Fäkalientank **1** für eine Sanitäreinrichtung. Zweckmäßigerweise und im Ausführungsbeispiel weist der Fäkalientank **1** zwei Zuläufe **3** auf, wie insbesondere in der Fig. 2 zu erkennen ist. Die Zuläufe **3** dienen zur Verbindung mit zumindest einer Sanitärvorrichtung der Sanitäreinrichtung und über diese Zuläufe **3** gelangen zweckmäßigerweise Fäkalien und/oder Abwasser aus zumindest einer Sanitärvorrichtung in den Fäkalientank **1.** Empfohlenermaßen und im Ausführungsbeispiel besitzt der Boden **14** des Fäkalientanks **1** eine Grundfläche von 10.000 cm² bis 40.000 cm². Im Ausführungsbeispiel ist die Grundfläche bzw. der Boden **14** des Fäkalientanks rechteckig ausgebildet und mag eine Grundfläche von beispielsweise 25.000 cm² aufweisen. Der in den Figuren dargestellte Fäkalientank **1** verfügt fernerhin über einen Auslass **4,** der bevorzugt zum Entleeren des Fäkalientanks **1** dient. Erfindungsgemäß ist in dem Fäkalientank **1** zumindest ein Absaugschwimmer **5** angeordnet. Vorzugsweise und im Ausführungsbeispiel ist in dem Fäkalientank **1** genau ein Absaugschwimmer **5** vorgesehen. Der Absaugschwimmer **5** weist erfindungsgemäß und im Ausführungsbeispiel eine Absaugkammer **6** und ein Absaugsieb **7** auf. An die Absaugkammer **6** ist zumindest eine Absaugleitung **8,** vorzugsweise und im Ausführungsbeispiel zwei Absaugleitungen **8** zur Verbindung mit zumindest einer Absaugpumpe angeschlossen. Es liegt im Rahmen der Erfindung, dass die Sanitäreinrichtung ein transportabler Sanitärcontainer **9** ist (Fig. 4 und 5) und dass der Sanitärcontainer **9** vorzugsweise zumindest eine Sanitärkabine **10** aufweist. Gemäß besonders bevorzugter Ausführungsform ist für jede Sanitärkabine **10** des Sanitärcontainers **9** und/oder für jede Sanitärvorrichtung **2** eine separate Absaugleitung **8** an die Absaugkammer **6** des Absaugschwimmers **5** angeschlossen. Mittels des Absaugschwimmers **5** bzw. mittels der Absaugleitungen **8** ist Flüssigkeit aus dem Fäkalientank **1** absaugbar und diese Flüssigkeit wird als Spülflüssigkeit für zumindest eine Sanitärvorrichtung der Sanitäreinrichtung verwendet. An die Absaugkammer **6** des Absaugschwimmers **5** ist zweckmäßigerweise und im Ausführungsbeispiel eine Spülleitung **11** angeschlossen, die vorzugsweise dazu dient, Brauchwasser bzw. eine Brauchwasservorlage in den Fäkalientank **1** einzubringen und/oder die Absaugkammer **6** und das Absaugsieb **7** zu spülen. Das Absaugsieb **7** bildet zweckmäßigerweise und im Ausführungsbeispiel diejenige Wandung des Absaugschwimmers **5,** die dem Boden **14** des Fäkalientanks **1** im Betriebszustand des Fäkalientanks **1** zugewandt ist. Nach empfohlener Ausführungsform der Erfindung und im Ausführungsbeispiel ist das Absaugsieb **7** ein engmaschiges Drahtgitter und weist eine Maschenweite von 0,1 mm bis 5,0 mm auf. Im Ausführungsbeispiel gemäß den Fig. 1 und 3 mag das Absaugsieb **7** eine Maschenweite von etwa 0,5 mm aufweisen. Die Grundfläche bzw. Absaugfläche des Absaugsiebes **7** beträgt zweckmäßigerweise 500 cm² bis 4.000 cm². Im Ausführungsbeispiel gemäß den Figuren mag die Grundfläche bzw. Absaugfläche des Absaugsiebes **7** etwa 2.500 cm² betragen. Grundfläche bzw. Absaugfläche des Absaugsiebes **7** meint in diesem Zusammenhang insbesondere diejenige Fläche des Absaugsiebes, durch die Flüssigkeit in die Absaugkammer **6** gelangen kann bzw. eingesaugt werden kann.

Die Fig. 3 zeigt einen erfindungsgemäßen Absaugschwimmer **5** mit einer Absaugkammer **6** und einem Absaugsieb **7,** sowie mit einer an die Absaugkammer **6** angeschlossenen Absaugleitung **8,** die zweckmäßigerweise mit einer nicht dargestellten Absaugpumpe in Verbindung steht. Im Ausführungsbeispiel gemäß der Fig. 3 bildet das Absaugsieb **7** die dem Boden **14** des Fäkalientanks **1** zugewandte Wandung des Absaugschwimmers **5.** Erfindungsgemäß weist der Absaugschwimmer **5** eine Schwimmkammer **12** auf, die mit Luft gefüllt ist. Zweckmäßigerweise ist die Schwimmkammer **12** eine von der Absaugkammer **6** räumlich getrennte Kammer und ist im Ausführungsbeispiel gemäß den Figuren bezogen auf den Boden **14** bzw. die Flüssigkeitsoberfläche **13** des Fäkalientanks **1** oberhalb der Absaugkammer **6** angeordnet und durch eine Wandung von der Absaugkammer **6** getrennt. Die Schwimmkammer **12** ist empfohlenermaßen und im Ausführungsbeispiel mit der Maßgabe ausgebildet, dass der Absaugschwimmer **5** im Betriebszustand des Fäkalientanks **1** mit einem Anteil von 35 % bis 80 % seiner Gesamthöhe H und/oder mit einem Anteil von 35 % bis 80 % seines Gesamtinnenvolumens aus der Flüssigkeitsoberfläche **13** des Fäkalientanks **1** herausragt. Im Ausführungsbeispiel gemäß der Fig.3 mag der Anteil der Gesamthöhe H, der aus der Flüssigkeitsoberfläche **13** des Fäkalientanks **1** herausragt etwa 60 % bis 70 % betragen. Gesamthöhe H meint insbesondere die größte Erstreckung des Absaugschwimmers **5** senkrecht zum Boden **14** bzw. zur Flüssigkeitsoberfläche **13** des Fäkalientanks **1.** In der Fig. 3 ist diese Höhe H dementsprechend die Erstreckung von dem Absaugsieb 7 bis zur Oberseite der Schwimmkammer **12.** Durch die Schwimmkammer **12** erfährt der Absaugschwimmer **5** also vorzugsweise einen Auftrieb. Zweckmäßigerweise und im Ausführungsbeispiel bedingt dies, dass zumindest ein Teil der Schwimmkammer **12** oberhalb der Flüssigkeitsoberfläche **13** des Fäkalientanks **1** angeordnet ist und zumindest ein Teil der Absaugkammer **6** unterhalb der Flüssigkeitsoberfläche **13** angeordnet ist. Durch das Absaugsieb **7** kann Flüssigkeit in die Absaugkammer **6** eindringen und diese Flüssigkeit kann insbesondere über die Absaugleitung **8** abgesaugt werden. Gemäß empfohlener Ausführungsform der Erfindung und im Ausführungsbeispiel ist der mit der Schwimmkammer **12** versehene Absaugschwimmer **5** im Betriebszustand des Fäkalientanks **1** mit Abstand bzw. berührungsfrei zu dem Boden **14** des Fäkalientanks **1** angeordnet. Dies ist insbesondere in der Fig. 3 zu erkennen. Dieser Ausführungsform liegt die Erkenntnis zugrunde, dass sich die im Fäkalientank befindlichen festen Bestandteile vermehrt in Bodennähe ansammeln und durch die Anordnung des Absaugschwimmers **5** mit Abstand bzw. berührungsfrei zu dem Boden **14** kann verhindert werden, dass Feststoff mit abgesaugt wird und/oder dass die festen Bestandteile das Absaugsieb **7** verstopfen bzw. verschmutzen. Die vorstehend beschriebene Auftriebswirkung wird vorzugsweise durch das Verhältnis des Innenvolumens der Absaugkammer **6** zum Innenvolumen der Schwimmkammer **12** beeinflusst und dieses Verhältnis beträgt empfohlenermaßen und im Ausführungsbeispiel zwischen 1,0 und 1,6. Es empfiehlt sich, dass das Verhältnis des Gesamtinnenvolumens des Absaugschwimmers **5** zum Gesamtinnenvolumen des Fäkalientanks **1** zwischen 0,001 und 0,2 beträgt. Im Ausführungsbeispiel mag das Verhältnis etwa 0,025 betragen (Fig. 1 und 2). Gesamtinnenvolumen des Fäkalientanks **1** meint das Fassungsvermögen des Fäkalientanks und Gesamtinnenvolumen des Absaugschwimmers meint das Gesamtinnenvolumen der Schwimmkammer **12** und der Absaugkammer **6.** Das Gesamtinnenvolumen bzw. Fassungsvermögen des Fäkalientanks im Ausführungsbeispiel mag etwa 500 bis 700 L betragen.

In den Fig. 4 und 5 ist ein erfindungsgemäßer transportabler Sanitärcontainer **9** dargestellt. Der transportable Sanitärcontainer **9** ist vorzugsweise und gemäß dem Ausführungsbeispiel nach den Fig. 4 und 5 als Sanitärcontainer auf einem Fahrgestell ausgebildet und kann als solcher an ein Kraftfahrzeug angehängt, zum Einsatzort transportiert und dort inklusive des Fahrgestells abgestellt werden. Der transportable Sanitärcontainer **9** weist vorzugsweise und im Ausführungsbeispiel zwei Sanitärkabinen **10** auf und in den Sanitärkabinen **10** sind Sanitärvorrichtungen **2** angeordnet. Insbesondere in der Fig. 5 ist zu erkennen, dass in einer der Sanitärkabinen **10** ein Urinal und ein WC-Becken angeordnet sind. Bevorzugt und im Ausführungsbeispiel ist eine der Sanitärkabinen **10** für männliche und eine der Sanitärkabinen **10** für weibliche Benutzer vorgesehen. Der transportable Sanitärcontainer **9** weist erfindungsgemäß zumindest einen Fäkalientank auf, der im Ausführungsbeispiel unterhalb des Containers bzw. im Zwischenraum zwischen Fahrgestell **20** und Containerboden **21** angeordnet ist. Bei diesem Fäkalientank handelt es sich bevorzugt und im Ausführungsbeispiel um einen vorstehend beschriebenen Fäkalientank **1.** Besonders bevorzugt und im Ausführungsbeispiel ist zwischen einer Außenwand bzw. Seitenwand **22** des transportablen Sanitärcontainers **9** und den dieser Seitenwand zugeordneten Kabinenseitenwänden bzw. Kabinenrückwänden **23** ein Serviceraum **24** vorgesehen, in dem vorzugsweise die zum Betrieb des transportablen Sanitärcontainers nötigen Einrichtungen angeordnet sind. Gemäß einer bevorzugten Ausführungsform der Erfindung und im Ausführungsbeispiel sind zwei Spülwasserbehälter **15** vorgesehen, in denen die aus dem Fäkalientank **1** abgesaugte Flüssigkeit bzw. die Spülflüssigkeit zwischengelagert wird. Empfohlenermaßen und im Ausführungsbeispiel ist jeder Sanitärkabine **10** des Sanitärcontainers **9** ein Spülwasserbehälter **15** zugeordnet. Zweckmäßigerweise und im Ausführungsbeispiel sind diese Spülwasserbehälter **15** in dem Serviceraum **24** angeordnet. In den Fig. 4 und 5 ist fernerhin zu erkennen, dass vorzugsweise in jeder Sanitärkabine **10** eine Handwaschvorrichtung **16** angeordnet ist und diese Handwaschvorrichtungen werden besonders bevorzugt mit Frischwasser aus einem Frischwassertank **17** versorgt.

Gemäß sehr empfohlener Ausführungsform der Erfindung und im Ausführungsbeispiel nach den Fig. 4 und 5 ist containeraußenseitig auf der Oberseite **18** des Sanitärcontainers **9** bzw. auf dem Containerdach zumindest ein Solarpanel **19** vorgesehen. Dieses Solarpanel **19** ist zweckmäßigerweise mit einer Batterie **25** bzw. einem Akkumulator verbunden und diese Batterie bzw. der Akkumulator **25** wird aufgrund von auf das Solarpanel **19** treffender Sonneneinstrahlung geladen. Die Batterie **25** ist vorzugsweise und im Ausführungsbeispiel in dem Serviceraum **24** untergebracht. Mittels der Batterie **25** kann der transportable Sanitärcontainer **9** mit Strom versorgt werden, insbesondere kann die zumindest eine Absaugpumpe durch die Batterie **25** mit Strom versorgt werden. Empfohlenermaßen ist dann keine zusätzliche Stromversorgung zum Betrieb des Sanitärcontainers **9** erforderlich, so dass der Sanitärcontainer **9** für einen gewissen Zeitraum weitgehend autark betrieben werden kann. Es liegt im Rahmen der Erfindung, dass auch andere Einrichtungen des transportablen Sanitärcontainers, beispielsweise Frischwasserpumpe, Beleuchtung oder dergleichen durch die Batterie **25** bzw. das Solarpanel **19** mit Strom versorgt werden. Die Fig. 4 zeigt im Übrigen, dass der Serviceraum **24** vorzugsweise durch eine Klappe von der Containeraußenseite zugänglich ist.

## Patentansprüche

1. Fäkalientank für eine Sanitäreinrichtung, wobei der Fäkalientank (1) zur Aufnahme der Fäkalien und/oder des Abwassers aus zumindest einer Sanitärvorrichtung (2) der Sanitäreinrichtung dient und zumindest einen Zulauf (3) und zumindest einen Auslass (4) aufweist, wobei in dem Fäkalientank (1) zumindest ein Absaugschwimmer (5) mit zumindest einer Absaugkammer (6) und mit zumindest einem Absaugsieb (7) angeordnet ist, wobei an die Absaugkammer (6) zumindest eine Absaugleitung (8) zur Verbindung mit zumindest einer Absaugpumpe angeschlossen ist, wobei mittels des Absaugschwimmers (5) bzw. mittels der Absaugleitung (8) Flüssigkeit aus dem Fäkalientank (1) absaugbar ist, welche Flüssigkeit als Spülflüssigkeit für zumindest eine Sanitärvorrichtung (2) der Sanitäreinrichtung verwendet wird, **dadurch gekennzeichnet, dass** der Absaugschwimmer (5) zumindest eine Schwimmkammer (12) aufweist und wobei die Schwimmkammer (12) mit Luft bzw. im Wesentlichen mit Luft gefüllt ist.

2. Fäkalientank nach Anspruch 1, wobei an die Absaugkammer (6) des Absaugschwimmers (5) zumindest eine Spülleitung (11) angeschlossen ist.

3. Fäkalientank nach einem der Ansprüche 1 oder 2, wobei das Absaugsieb (7) eine Maschenweite von 0,1 mm bis 5,0 mm, bevorzugt von 0,2 mm bis 2,0 mm, besonders bevorzugt von 0,3 mm bis 1,0 mm aufweist.

4. Fäkalientank nach einem der Ansprüche 1 bis 3, wobei die Schwimmkammer (12) mit der Maßgabe ausgebildet ist, dass der Absaugschwimmer (5) im Betriebszustand des Fäkalientanks (1) mit einem Anteil von 5 % bis 95 % seiner Gesamthöhe H aus der Flüssigkeitsoberfläche (13) des Fäkalientanks (1) herausragt, vorzugsweise mit einem Anteil von 20 % bis 85 %, bevorzugt mit einem Anteil von 35 % bis 80 %, besonders bevorzugt mit einem Anteil von 50 % bis 75 % seiner Gesamthöhe H aus der Flüssigkeitsoberfläche (13) des Fäkalientanks (1) herausragt.

5. Fäkalientank nach einem der Ansprüche 1 bis 4, wobei der mit der Schwimmkammer (12) versehene Absaugschwimmer (5) im Betriebszustand des Fäkalientanks (1) mit Abstand bzw. berührungsfrei zu dem Boden (14) des Fäkalientanks (1) angeordnet ist.

6. Fäkalientank nach einem der Ansprüche 1 bis 5, wobei das Verhältnis des Innenvolumens der Absaugkammer (6) zum Innenvolumen der Schwimmkammer (12) zwischen 0,5 und 2,0, vorzugsweise zwischen 0,7 und 1,8, bevorzugt zwischen 1,0 und 1,6 beträgt.

7. Fäkalientank nach einem der Ansprüche 1 bis 6, wobei das Verhältnis des Gesamtinnenvolumens des Absaugschwimmers (5) zum Gesamtinnenvolumen des Fäkalientanks (1) zwischen 0,001 und 0,2, vorzugsweise zwischen 0,005 und 0,1, bevorzugt zwischen 0,01 und 0,05 beträgt.

8. Fäkalientank nach einem der Ansprüche 1 bis 7, wobei das Absaugsieb (7) eine Grundfläche bzw. Absaugfläche von 500 cm² bis 4.000 cm², vorzugsweise von 1.000 cm² bis 3500 cm², besonders bevorzugt von 1.500 cm² bis 3000 cm² aufweist.

9. Fäkalientank nach einem der Ansprüche 1 bis 8, wobei der Fäkalientank (1) bzw. der Boden (14) des Fäkalientanks (1) eine Grundfläche von 10.000 cm² bis 40.000 cm², vorzugsweise von 15.000 cm² bis 35.000 cm², besonders bevorzugt von 20.000 cm² bis 30.000 cm² aufweist.

10. Fäkalientank nach einem der Ansprüche 1 bis 9, wobei das Verhältnis der Grundfläche bzw. Absaugfläche des Absaugsiebes (7) zur Grundfläche des Fäkalientanks (1) zwischen 0,025 und 0,4, vorzugsweise zwischen 0,05 und 0,3, bevorzugt zwischen 0,05 und 0,2 beträgt.

11. Transportabler Sanitärcontainer mit zumindest einer Sanitärkabine (10), zumindest einer in der Sanitärkabine (10) angeordneten Sanitärvorrichtung (2) und zumindest einem Fäkalientank (1) - insbesondere einem Fäkalientank gemäß einem der Ansprüche 1 bis 10 - zur Aufnahme der Fäkalien und/oder des Abwassers aus der zumindest einen Sanitärvorrichtung (2), wobei der Fäkalientank (1) zumindest einen Zulauf (3) und zumindest einen Auslass (4) aufweist, wobei in dem Fäkalientank (1) zumindest ein Absaugschwimmer (5) mit zumindest einer Absaugkammer (6) und zumindest einem Absaugsieb (7) angeordnet ist, wobei an die Absaugkammer (6) zumindest eine Absaugleitung (8) zur Verbindung mit zumindest einer Absaugpumpe angeschlossen ist, wobei mittels des Absaugschwimmers (5) bzw. mittels der Absaugleitung (8) Flüssigkeit aus dem Fäkalientank (1) absaugbar ist, welche Flüssigkeit als Spülflüssigkeit für zumindest eine Sanitärvorrichtung (2) des Sanitärcontainers (9) verwendet wird, wobei der Absaugschwimmer (5) zumindest eine Schwimmkammer (12) aufweist und wobei die Schwimmkammer (12) mit Luft bzw. im Wesentlichen mit Luft gefüllt ist.

12. Transportabler Sanitärcontainer nach Anspruch 11, wobei zumindest ein Spülwasserbehälter (15) vorgesehen ist, in dem die aus dem Fäkalientank abgesaugte Flüssigkeit bzw. die Spülflüssigkeit zwischengelagert wird und wobei vorzugsweise jeder Sanitärkabine (10) und/oder jeder Sanitärvorrichtung (2) des Sanitärcontainers (9) zumindest ein Spülwasserbehälter (15) zugeordnet ist.

13. Transportabler Sanitärcontainer nach einem der Ansprüche 11 oder 12, wobei der Sanitärcontainer (9) zumindest zwei, vorzugsweise zwei, Sanitärkabinen (10) aufweist.

14. Transportabler Sanitärcontainer nach einem der Ansprüche 11 bis 13, wobei in der zumindest einen Sanitärkabine (10), vorzugsweise in jeder Sanitärkabine (10), eine Handwaschvorrichtung (16) angeordnet ist, die vorzugsweise mit Frischwasser aus einem Frischwassertank (17) versorgt wird.

15. Transportabler Sanitärcontainer nach einem der Ansprüche 11 bis 14, wobei auf der Oberseite (18) des Sanitärcontainers (9) zumindest ein Solarpanel (19) angeordnet ist.

16. Transportabler Sanitärcontainer nach Anspruch 15, wobei der Sanitärcontainer (9) im Betriebszustand über das zumindest eine Solarpanel (19) mit Strom versorgt wird und wobei bevorzugt keine zusätzliche Stromversorgung zum Betrieb des Sanitärcontainers (9) erforderlich ist.

17. Verfahren zur Rezyklierung von Spülwasser in einer Sanitäreinrichtung - insbesondere in einem transportablen Sanitärcontainer gemäß einem der Ansprüche 11 bis 16 - wobei die Sanitäreinrichtung zumindest einen Fäkalientank - insbesondere einen Fäkalientank gemäß einem der Ansprüche 1 bis 11 - aufweist, wobei in dem Fäkalientank (1) Fäkalien und/oder Abwasser aus zumindest einer Sanitärvorrichtung (2) der Sanitäreinrichtung aufgenommen werden, wobei in dem Fäkalientank (1) zumindest ein Absaugschwimmer (5) mit zumindest einer Absaugkammer (6) und zumindest einem Absaugsieb (7) angeordnet ist, wobei der Absaugschwimmer (5) zumindest eine Schwimmkammer (12) aufweist, wobei die Schwimmkammer (12) mit Luft bzw. im Wesentlichen mit Luft gefüllt ist, wobei an die Absaugkammer (6) zumindest eine Absaugleitung (8) zur Verbindung mit zumindest einer Absaugpumpe angeschlossen ist und wobei mittels des Absaugschwimmers (5) bzw. mittels der Absaugleitung (8) Flüssigkeit aus dem Fäkalientank (1) abgesaugt wird, wobei vorzugsweise die Flüssigkeit für den Einsatz als Spülflüssigkeit mit zumindest einem Desinfektionsmittel versetzt wird, wobei die so erzeugte Spülflüssigkeit zur Spülung zumindest einer Sanitärvorrichtung (2) in der Sanitäreinrichtung verwendet wird und wobei das verunreinigte Spülwasser anschließend in den zumindest einen Fäkalientank (1) zurückgeführt wird.

18. Verfahren nach Anspruch 17, wobei das Desinfektionsmittel Wasserstoffperoxid ist.

19. Verfahren nach einem der Ansprüche 17 oder 18, wobei beim Absaugen der Flüssigkeit mittels des zumindest einen Absaugschwimmers (5) aus dem Fäkalientank (1) die in dem Fäkalientank (1) vorhandenen festen Bestandteile und/oder die Schwebeteilchen aufgrund der Filterwirkung des Absaugsiebes (7) in dem Fäkalientank (1) verbleiben und lediglich Flüssigkeit bzw. im Wesentlichen Flüssigkeit abgesaugt wird.

20. Verfahren nach einem der Ansprüche 17 bis 19, wobei das Desinfektionsmittel der abgesaugten Flüssigkeit über eine Venturidüse zugegeben wird.

## Claims

1. A waste tank for a sanitary facility, wherein the waste tank (1) serves to receive the fecal matter and/or the waste water from at least one sanitary device (2) of the sanitary facility and has at least one inlet (3) and at least one outlet (4), wherein at least one suction float (5) comprising at least one suction chamber (6) and comprising at least one suction screen (7) is arranged in the waste tank (1), wherein at least one suction line (8) for connection to at least one suction pump is connected to the suction chamber (6), wherein liquid can be extracted from the waste tank (1) by means of the suction float (5) or by means of the suction line (8), respectively, which liquid is used as flushing liquid for at least one sanitary device (2) of the sanitary facility,
**characterized in that**
the suction float (5) has at least one float chamber (12), and wherein the float chamber (12) is filled with air or essentially with air, respectively.

2. The waste tank according to claim 1, wherein at least one flushing line (11) is connected to the suction chamber (6) of the suction float (5).

3. The waste tank according to one of claims 1 or 2, wherein the suction screen (7) has a mesh size of from 0.1 mm to 5.0 mm, preferably from 0.2 mm to 2.0 mm, particularly preferably from 0.3 mm to 1.0 mm.

4. The waste tank according to one of claims 1 to 3, wherein the float chamber (12) is formed with the proviso that in the operating state of the waste tank (1), the suction float (5) protrudes from the liquid surface (13) of the waste tank (1) with a portion of from 5% to 95% of its total height H, preferably protrudes from the liquid surface (13) of the waste tank (1) with a portion of from 20 % to 85 %, preferably with a portion of from 35 % to 80 %, particularly preferably with a portion of from 50 % to 75 % of its total H.

5. The waste tank according to one of claims 1 to 4, wherein in the operating state of the waste tank (1), the suction float (5), which is provided with the float chamber (12), is arranged at a distance from or in a contact-free manner with, respectively, the bottom (14) of the waste tank (1).

6. The waste tank according to one of claims 1 to 5, wherein the ratio of the internal volume of the suction chamber (6) to the internal volume of the float chamber (12) is between 0.5 and 2.0, preferably between 0.7 and 1.8, preferably between 1.0 and 1.6.

7. The waste tank according to one of claims 1 to 6, wherein the ratio of the total internal volume of the suction float (5) to the total internal volume of the waste tank (1) is between 0.001 and 0.2, preferably between 0.005 and 0.1, preferably between 0.01 and 0.05.

8. The waste tank according to one of claims 1 to 7, wherein the suction screen (7) has a base area or extraction area, respectively of from 500 cm² to 4,000 cm², preferably from 1,000 cm² to 3500 cm², particularly preferably from 1,500 cm² to 3000 cm².

9. The waste tank according to one of claims 1 to 8, wherein the waste tank (1) or the bottom (14) of the waste tank (1), respectively, has a base area of from 10,000 cm² to 40,000 cm², preferably from 15,000 cm² to 35,000 cm², particularly preferably from 20,000 cm² to 30,000 cm².

10. The waste tank according to one of claims 1 to 9, wherein the ratio of the base area or extraction area, respectively, of the suction screen (7) to the base area of the waste tank (1) is between 0.025 and 0.4, preferably between 0.05 and 0.3, preferably between 0.05 and 0.2.

11. A portable sanitary container comprising at least one sanitary cubicle (10), at least one sanitary device (2) arranged in the sanitary cubicle (10), and at least one waste tank (1) - in particular a waste tank according to one of claims 1 to 10 - for receiving the fecal matter and/or the waste water from the at least one sanitary device (2), wherein the waste tank (1) has at least one inlet (3) and at least one outlet (4), wherein at least one suction float (5) comprising at least one suction chamber (6) and at least one suction screen (7) is arranged in the waste tank (1), wherein at least one suction line (8) for connection to at least one suction pump is connected to the suction chamber (6), wherein liquid can be extracted from the waste tank (1) by means of the suction float (5) or by means of the suction line (8), respectively, which liquid is used as flushing liquid for at least one sanitary device (2) of the sanitary container (9), wherein the suction float (5) has at least one float chamber (12), and wherein the float chamber (12) is filled with air or essentially with air, respectively.

12. The portable sanitary container according to claim 11, wherein at least one flushing water container (15) is provided, in which the liquid extracted from the waste tank or the flushing liquid, respectively, is intermediately stored, and wherein at least one flushing water container (15) is preferably assigned to each sanitary cubicle (10) and/or to each sanitary device (2) of the sanitary container (9).

13. The portable sanitary container according to one of claims 11 or 12, wherein the sanitary container (9) has at least two, preferably two, sanitary cubicles (10).

14. The portable sanitary container according to one of claims 11 to 13, wherein a hand washing device (16), which is preferably supplied with fresh water from a fresh water tank (17), is arranged in the at least one sanitary cubicle (10), preferably in each sanitary cubicle (10).

15. The portable sanitary container according to one of claims 11 to 14, wherein at least one solar panel (19) is arranged on the top side (18) of the sanitary container (9).

16. The portable sanitary container according to claim 15, wherein in the operating state, the sanitary container (9) is supplied with power via the at least one solar panel (19), and wherein preferably no additional power supply is required for operating the sanitary container (9).

17. A method for recycling flushing water in a sanitary facility - in particular in a portable sanitary container according to one of claims 11 to 16 - wherein the sanitary facility has at least one waste tank (1) - in particular a waste tank according to one of claims 1 to 11 - wherein fecal matter and/or waste water from at least one sanitary device (2) of the sanitary facility are received in the waste tank (1), wherein at least one suction float (5) comprising at least one suction chamber (6) and comprising at least one suction screen (7) is arranged in the waste tank (1), wherein the suction float (5) has at least one float chamber (12), wherein the float chamber (12) is filled with air or essentially with air, respectively, wherein at least one suction line (8) for connection to at least one suction pump is connected to the suction chamber (6), and wherein liquid can be extracted from the waste tank (1) by means of the suction float (5) or by means of the suction line (8), respectively, wherein at least one disinfectant is preferably added to the liquid for the use as flushing liquid, wherein the flushing liquid created in this way is used to flush at least one sanitary device (2) in the sanitary facility, and wherein the contaminated flushing water is subsequently guided back into the at least one waste tank (1).

18. The method according to claim 17, wherein the disinfectant is hydrogen peroxide.

19. The method according to one of claims 17 or 18, wherein, due to the filter effect of the suction screen (7), the solid constituents and/or the airborne particles, which are present in the waste tank (1), remain in the waste tank (1) in response to extracting the liquid by means of the at least one suction float (5) out of the waste tank (1), and only liquid or essentially liquid, respectively, is extracted.

20. The method according to one of claims 17 to 19, wherein the disinfectant is added to the extracted liquid via a Venturi nozzle.

## Revendications

1. Fosse septique pour une installation sanitaire, dans laquelle la fosse septique (1) sert à recevoir des matières fécales et/ou des eaux usées provenant d'au moins un dispositif sanitaire (2) de l'installation sanitaire et présente au moins une arrivée (3) et au moins une évacuation (4), dans laquelle au moins un flotteur d'aspiration (5) avec au moins une chambre d'aspiration (6) et au moins un tamis d'aspiration (7) est disposé dans la fosse septique (1), dans laquelle au moins une conduite d'aspiration (8) destinée à la liaison avec au moins une pompe d'aspiration est raccordée à la chambre d'aspiration (6), dans laquelle du liquide peut être aspiré hors de la fosse septique (1) à l'aide du flotteur d'aspiration (5) ou à l'aide de la conduite d'aspiration (8), ledit liquide étant utilisé comme liquide de rinçage pour au moins un dispositif sanitaire (2) de l'installation sanitaire,
**caractérisée en ce que**
le flotteur d'aspiration (5) présente au moins une chambre de flotteur (12) et dans laquelle la chambre de flotteur (12) est remplie d'air ou essentiellement d'air.

2. Fosse septique selon la revendication 1, dans laquelle au moins une conduite de rinçage (11) est raccordée à la chambre d'aspiration (6) du flotteur d'aspiration (5).

3. Fosse septique selon l'une des revendications 1 et 2, dans laquelle le tamis d'aspiration (7) présente une largeur de maille de 0,1 mm à 5,0 mm, de préférence de 0,2 mm à 2,0 mm, et plus préférentiellement de 0,3 mm à 1,0 mm.

4. Fosse septique selon l'une des revendications 1 à 3, dans laquelle la chambre de flotteur (12) est conçue de telle façon que le flotteur d'aspiration (5), dans l'état de fonctionnement de la fosse septique (1), fait saillie au-dessus de la surface de liquide (13) de la fosse septique (1) avec une part de 5% à 95% de sa hauteur totale H, avantageusement avec une part de 20% à 85%, de préférence avec une part de 35% à 80%, plus préférentiellement avec une part de 50% à 75% de sa hauteur totale H au-dessus de la surface de liquide (13) de la fosse septique (1).

5. Fosse septique selon l'une des revendications 1 à 4, dans laquelle le flotteur d'aspiration (5) doté de la chambre de flotteur (12) est disposé à une distance du fond (14) de la fosse septique (1) ou sans contact avec celui-ci, dans l'état de fonctionnement de la fosse septique (1).

6. Fosse septique selon l'une des revendications 1 à 5, dans laquelle le rapport entre le volume intérieur de la chambre d'aspiration (6) et le volume intérieur de la chambre de flotteur (12) est compris entre 0,5 et 2,0, avantageusement entre 0,7 et 1,8, de préférence entre 1,0 et 1,6.

7. Fosse septique selon l'une des revendications 1 à 6, dans laquelle le rapport entre le volume intérieur global du flotteur d'aspiration (5) et le volume intérieur global de la fosse septique (1) est compris entre 0,001 et 0,2, avantageusement entre 0,005 et 0,1, de préférence entre 0,01 et 0,05.

8. Fosse septique selon l'une des revendications 1 à 7, dans laquelle le tamis d'aspiration (7) présente une surface de base ou une surface d'aspiration de 500 cm² à 4.000 cm², avantageusement de 1.000 cm² à 3.500 cm², plus préférentiellement de 1.500 cm² à 3.000 cm².

9. Fosse septique selon l'une des revendications 1 à 8, dans laquelle la fosse septique (1) ou le fond (14) de la fosse septique (1) présente une surface de base de 10.000 cm² à 40.000 cm², avantageusement de 15.000 cm² à 35.000 cm², plus préférentiellement de 20.000 cm² à 30.000 cm².

10. Fosse septique selon l'une des revendications 1 à 9, dans laquelle le rapport entre la surface de base ou la surface d'aspiration du tamis d'aspiration (7) et la surface de base de la fosse septique (1) est compris entre 0,025 et 0,4, avantageusement entre 0,05 et 0,3, plus préférentiellement entre 0,05 et 0,2.

11. Récipient sanitaire transportable comprenant au moins une cabine sanitaire (10), au moins un dispositif sanitaire (2) disposé dans la cabine sanitaire (10) et au moins une fosse septique (1) - en particulier une fosse septique selon l'une des revendications 1 à 10 - pour la réception de matières fécales et/ou d'eaux usées provenant de l'au moins un dispositif sanitaire (2), dans lequel la fosse septique (1) comporte au moins une arrivée (3) et au moins une évacuation (4), dans lequel au moins un flotteur d'aspiration (5) avec au moins une chambre d'aspiration (6) et au moins un tamis d'aspiration (7) est disposé dans la fosse septique (1), dans lequel au moins une conduite d'aspiration (8) destinée à la liaison avec au moins une pompe d'aspiration est raccordée à la chambre d'aspiration (6), dans lequel du liquide peut être aspiré hors de la fosse septique (1) à l'aide du flotteur d'aspiration (5) ou à l'aide de la conduite d'aspiration (8), ledit liquide étant utilisé comme liquide de rinçage pour au moins un dispositif sanitaire (2) du récipient sanitaire (9), dans laquelle le flotteur d'aspiration (5) comporte au moins une chambre de flotteur (12) et dans lequel la chambre de flotteur (12) est remplie d'air ou essentiellement d'air.

12. Récipient sanitaire transportable selon la revendication 11, dans lequel il est prévu au moins un réservoir d'eau de rinçage (15), dans lequel le liquide ou le liquide de rinçage aspiré hors du récipient sanitaire est stocké temporairement, et dans lequel au moins un réservoir d'eau de rinçage (15) est attribué à chaque cabine sanitaire (10) et/ou à chaque dispositif sanitaire (2) du récipient sanitaire (9).

13. Récipient sanitaire transportable selon l'une des revendications 11 et 12, dans lequel le récipient sanitaire (9) comporte au moins deux, avantageusement deux, cabines sanitaires (10).

14. Récipient sanitaire transportable selon l'une des revendications 11 à 13, dans lequel un lave-mains (16) est disposé dans l'au moins une cabine sanitaire (10), avantageusement dans chaque cabine sanitaire (10), lequel est avantageusement alimenté en eau fraîche à partir d'un réservoir d'eau fraîche (17).

15. Récipient sanitaire transportable selon l'une des revendications 11 à 14, dans lequel au moins un panneau solaire (19) est disposé sur le côté supérieur (18) du récipient sanitaire (9).

16. Récipient sanitaire transportable selon la revendication 15, dans lequel le récipient sanitaire (9) est alimenté par l'au moins un panneau solaire (19) dans l'état de fonctionnement et dans lequel aucune alimentation électrique supplémentaire n'est de préférence nécessaire au fonctionnement du récipient sanitaire (9).

17. Procédé de recyclage d'eau de rinçage dans une installation sanitaire - en particulier dans un récipient sanitaire transportable selon l'une des revendications 11 à 16 - dans lequel l'installation sanitaire comporte au moins une fosse septique - en particulier une fosse septique selon l'une des revendications 1 à 11 -, dans lequel des matières fécales et/ou des eaux usées provenant d'au moins un dispositif sanitaire (2) de l'installation sanitaire sont reçues dans la fosse septique (1), dans lequel au moins un flotteur d'aspiration (5) avec au moins une chambre d'aspiration (6) et au moins un tamis d'aspiration (7) est disposé dans la fosse septique (1), dans lequel le flotteur d'aspiration (5) comporte au moins une chambre de flotteur (12), dans lequel la chambre de flotteur (12) est remplie d'air ou essentiellement d'air, dans lequel au moins une conduite d'aspiration (8) destinée à la liaison avec au moins une pompe d'aspiration est raccordée à la chambre d'aspiration (6) et dans laquelle du liquide peut être aspiré hors de la fosse septique (1) à l'aide du flotteur d'aspiration (5) ou à l'aide de la conduite d'aspiration (8), dans lequel le liquide est avantageusement mélangé avec au moins un désinfectant pour être utilisé comme liquide de rinçage, dans lequel le liquide de rinçage ainsi produit est utilisé pour le rinçage d'au moins un dispositif sanitaire (2) dans l'installation sanitaire et dans lequel l'eau de rinçage contaminée est ensuite renvoyée vers l'au moins une fosse septique (1).

18. Procédé selon la revendication 17, dans lequel le désinfectant est du peroxyde d'hydrogène.

19. Procédé selon l'une des revendications 17 et 18, dans lequel, lors de l'aspiration de liquide à l'aide de l'au moins un flotteur d'aspiration (5) hors de la fosse septique (1), les composants solides et/ou les particules en suspension présents dans la fosse septique (1) restent dans la fosse septique (1) en raison de l'effet filtrant du tamis d'aspiration (7) et uniquement ou presque uniquement du liquide est aspiré.

20. Procédé selon l'une des revendications 17 à 19, dans lequel le désinfectant est ajouté au liquide aspiré par le biais d'une buse de Venturi.
